# EUROPÄISCHE PATENTSCHRIFT

(11) **EP 2 375 263 B1**
(45) Veröffentlichungstag und Bekanntmachung des Hinweises auf die Patenterteilung: **08.04.2015**
(21) Anmeldenummer: 11001194.7
(22) Anmeldetag: 14.02.2011
(51) Int. Cl.: G01S 5/00, G01S 5/06

(54) **Verfahren und System zur Ortsbestimmung einer ein elektromagnetisches Signal aussendenden Vorrichtung**
Method and system for locating a device sending an electromagnetic signal
Procédé et système de détermination spatiale d'un dispositif émettant un signal électromagnétique

(30) Priorität: 07.04.2010 DE 102010014108
(43) Veröffentlichungstag der Anmeldung: 12.10.2011
(73) Patentinhaber: Rohde & Schwarz GmbH & Co. KG, 81671 München (DE)
(72) Erfinder: Kühne, Jens, 85560 Ebersberg (DE)
(74) Vertreter: Beder, Jens

(56) Entgegenhaltungen:
- DE-A1- 19 936 846
- DE-A1-102006 040 497
- DE-A1-102006 049 862
- US-A1- 2004 214 585
- US-A1- 2008 204 322

## Beschreibung

Die Erfindung betrifft ein Verfahren und System zur Ortsbestimmung einer ein elektromagnetisches Signal aussendenden Vorrichtung.

Die DE 10 2006 040 497 A1 offenbart ein Ortsbestimmungssystem mit drei Empfangsstationen zum Empfangen eines Signals. Der Ort des ausgesendeten Signals kann auf der Basis der unterschiedlichen Ankunftszeiten des Signals an den drei Empfangsstationen eindeutig berechnet werden. Zur Bestimmung der Zeitdifferenz des Eintreffens des Signals an den drei Empfangsstationen bedarf es einer eindeutig zugeordneten Referenz in dem Signal. Solche Referenzen bilden in der Regel Pulse in gepulsten Signalen. Nachteilig an diesem Verfahren ist es, dass eine solche Referenz in zeitkontinuierlichen Signalen oder in mit Rauschen überlagerten Signalen nicht oder nur schwer zu erfassen ist.

In DE 102006049862 A1 ist ein ähnliches Ortsbestimmungssystem offenbart.

Aufgabe der Erfindung ist es deshalb, ein Ortsbestimmungssystem und -verfahren zu schaffen, das auch für zeitkontinuierliche und verrauschte Signale ohne Probleme funktioniert.

Die Aufgabe ist durch das erfindungsgemäße Verfahren nach Anspruch 1 und das erfindungsgemäße System nach Anspruch 6 gelöst.

Ein beispielhaftes Verfahren zur Ortsbestimmung einer ein elektromagnetisches Signal aussendenden Vorrichtung mittels wenigstens dreier ortsverschiedener Empfangseinheiten weist die folgenden Schritte auf: Das von der Vorrichtung ausgesendete elektromagnetische Signal wird an jeder der wenigstens drei Empfangseinheiten empfangen. Der Ort der Vorrichtung wird aus wenigstens zwei Zeitdifferenzen des Empfangs des ausgestrahlten Signals an den wenigstens drei Empfangseinheiten berechnet. Die Zeitdifferenz des Empfangs des ausgestrahlten Signals an zwei Empfangseinheiten wird dabei wie folgt bestimmt: Jede Empfangseinheit bestimmt einen Signalausschnitt des an dieser Empfangseinheit empfangenen Signals. Jede Empfangseinheit sendet den erfassten Signalausschnitt an eine Zeitdifferenzerfassungsvorrichtung. In der Zeitdifferenzerfassungsvorrichtung werden die oben beschriebenen Zeitdifferenzen mittels eines Maximums einer Zeitdifferenz-spezifischen Kreuzkorrelationsfunktion zweier durch verschiedene Empfangseinheiten empfangener Signalausschnitte bestimmt. Die Ortsbestimmung des Verfahrens kann durch Zeitdifferenzen von Signalen weiterer Empfangseinheiten mit den Signalen der drei Empfangseinheiten weiter verbessert werden.

Ein beispielhaftes System zur Ortsbestimmung einer ein elektromagnetisches Signal aussendenden Vorrichtung weist zumindest drei Empfangseinheiten zum Empfangen des ausgesendeten elektromagnetischen Signals auf. Weiterhin weist das System eine Ortsbestimmungsvorrichtung zur Berechnung des Ortes der sendenden Vorrichtung aus zumindest zwei Zeitdifferenzen des Empfangs des ausgestrahlten Signals an den Empfangseinheiten auf. Zur Bestimmung der Zeitdifferenzen weist das System eine Signalausschnitterfassungsvorrichtung in jeder Empfangseinheit auf, die einen Signalausschnitt des an der Empfangseinheit empfangenen Signals erfasst. Eine Übertragungs- bzw. Sendevorrichtung in jeder Empfangseinheit sendet diesen Signalausschnitt an eine Zeitdifferenzerfassungsvorrichtung. Die Zeitdifferenzerfassungsvorrichtung bestimmt daraus die wenigstens zwei Zeitdifferenzen. Dazu wird für die Ermittlung jeder Zeitdifferenz aus zwei Signalausschnitten eine Kreuzkorrelationsfunktion berechnet und aus dem Maximum der Kreuzkorrelationsfunktion die Zeitdifferenz der Signalausschnitte der Empfangssignale bestimmt.

Die Bestimmung der Zeitdifferenz aus den Maxima der Kreuzkorrelationsfunktionen jeweils zweier Signalausschnitte des an zwei Empfangseinheiten empfangenen Signals hat den Vorteil, dass in dem empfangenen Signal keine gemeinsame zeitliche Referenz erfasst werden muss. Die Bestimmung der Zeitdifferenz zwischen den empfangenen Signalen wird somit stabiler und die Empfangseinheiten können einfacher gestaltet werden, da keine aufwendige Suche des zeitlichen Referenzpunkts in dem empfangenen Signal notwendig ist. Sollte es eine höhere Anzahl an zu ortenden Sendern geben, können aus zwei Signalausschnitten zweier Empfangseinheiten auch die zwei Zeitdifferenzen zwischen den Ankunftszeiten der Signale der beiden Sender an den zwei Empfangseinheiten bestimmt werden, da die Kreuzkorrelationsfunktion so zwei Maxima zeigt.

Die abhängigen Ansprüche betreffen vorteilhafte Weiterbildungen der Erfindung.

So ist es vorteilhaft, die drei Empfangseinheiten zeitlich zu synchronisieren, so dass Fehler auf der Basis von unterschiedlichen Zeiten in den Empfangseinheiten vermieden werden.

Für periodische Signale ist es von Vorteil, die Dauer der Signalausschnitte größer als eine Periodendauer des ausgesendeten Signals zu wählen oder die Dauer der Signalausschnitte an die Periodendauer des ausgesendeten Signals anzupassen. Dies ist z. B. für gepulste periodische Signale von Vorteil, da so sichergestellt wird, dass in jedem Signalausschnitt zumindest ein Puls auftritt.

Weiterhin ist es vorteilhaft, dass die Kreuzkorrelationsfunktion nur für positive oder nur für negative Zeitverschiebungen berechnet wird. Wenn die aus dem Maximum der Kreuzkorrelationsfunktion bestimmte Zeitdifferenz größer ist als die halbe Periodendauer, kann die zu bestimmende Zeitdifferenz als Differenz der aus dem Maximum der Korrelationsfunktion bestimmten Zeitdifferenz von der Periodendauer berechnet werden. Dadurch kann die Kreuzkorrelationsfunktion nur durch die Verschiebung der beiden Signalausschnitte in eine Richtung berechnet werden ohne die Information zu benötigen, an welcher Empfangseinheit das ausgestrahlte Signal zuerst angekommen ist.

Im Folgenden werden die zumindest drei Empfangseinheiten als erste, zweite und dritte Empfangseinheit bezeichnet. Es ist insbesondere vorteilhaft, dass z. B. die zweite Empfangseinheit zumindest einen Teil der Zeitdifferenzerfassungsvorrichtung aufweist, der oder die geeignet ist, aus dem Signalausschnitt der ersten und zweiten Empfangseinheit eine Kreuzkorrelationsfunktion zu berechnen und die Zeitdifferenz zwischen den Empfangssignalen in dem Signalausschnitt der ersten und zweiten Empfangseinheiten aus dem Maximum der der Kreuzkorrelation zu bestimmen. Dies hat den Vorteil, dass nur der Signalausschnitt der ersten Empfangseinheit zu der zweiten Empfangseinheit gesendet werden muss und in der zweiten Empfangseinheit der Signalausschnitt der zweiten Empfangseinheit ohne einen Sendevorgang bereits vorliegt. Anstatt des vollständigen Signalausschnitts der zweiten Empfangseinheit muss dann nur das Ergebnis der Zeitdifferenzerfassungsvorrichtung der zweiten Empfangseinheit an die Ortsbestimmungsvorrichtung gesendet werden. Die Ortsbestimmungsvorrichtung kann somit einfacher ausgebildet werden, da die rechenintensive Kreuzkorrelationsfunktion bereits in der zweiten Empfangseinheit berechnet wird. So kann die Ortsbestimmungsvorrichtung zum Bespiel für den mobilen Einsatz leichter gestaltet sein.

Es ist weiterhin vorteilhaft, dass die dritte Empfangseinheit einen Signalausschnitt des an der dritten Empfangseinheit empfangenen Signals an die Zeitdifferenzerfassungsvorrichtung zu der zweiten Empfangseinheit sendet. Die Zeitdifferenzerfassungsvorrichtung ist weiterhin geeignet, aus dem Signalausschnitt der zweiten und dritten Empfangseinheit eine Kreuzkorrelationsfunktion zu berechnen und die Zeitdifferenz zwischen den Empfangssignalen in den Signalausschnitten der zweiten und dritten Empfangseinheit aus dem Maximum der der Kreuzkorrelation zu bestimmen. Ein solches System hat den Vorteil, dass die benötigte Rechenleistung zur Berechnung der Kreuzkorrelationsfunktionen in einer einzigen Empfangseinheit, hier der zweiten, zusammengefasst werden kann und die weiteren Empfangseinheiten sehr einfach ausgebildet sein können. Weiterhin ist es vorteilhaft, dass die berechneten Zeitdifferenzen der Zeitdifferenzerfassungsvorrichtung von der zweiten Empfangseinheit gemeinsam an die Ortsbestimmungsvorrichtung gesendet werden können.

Alternativ ist es von Vorteil, dass die zweite Empfangseinheit eine erste Komponente als Teil der Zeitdifferenzerfassungsvorrichtung und die dritte Empfangseinheit eine zweite Komponente der Zeitdifferenzerfassungsvorrichtung aufweist. Der Signalausschnitt der ersten Empfangseinheit und der dritten Empfangseinheit wird an die zweite Komponente gesendet. In der zweiten Komponente wird aus den Signalausschnitten der ersten und dritten Empfangseinheit eine Kreuzkorrelationsfunktion berechnet und die Zeitdifferenz zwischen den Empfangssignalen in den Signalausschnitten der ersten und dritten Empfangseinheit aus dem Maximum der der Kreuzkorrelation bestimmt. Dies hat den Vorteil, dass die Rechenkapazität in der zweiten und der dritten Empfangseinheit aufgeteilt werden kann und somit eine günstige und schnelle Berechnung der Kreuzkorrelationsfunktionen in der zweiten und dritten Empfangseinheit gewährleistet werden kann. Dies hat weiterhin den Vorteil, dass nur der Signalausschnitt der ersten Empfangseinheit an die zweite und dritte Empfangseinheit gesendet werden muss und somit eine geringst mögliche Menge an Daten übertragen wird. Die zu übertragende Datenmenge bei der Übertragung der Ergebnisse von der zweiten und dritten Empfangseinheit an die Ortsbestimmungsvorrichtung ist dabei vernachlässigbar. Eine solche Reduktion der Übertragungsmenge reduziert auch die Wahrscheinlichkeit einer Ortung des Ortsbestimmungssystems.

Eine zu bestimmende Zeitdifferenz ist der Zeitversatz zwischen einem an einer willkürlichen ersten Empfangseinheit empfangenen Signal und dem gleichen an einer willkürlichen zweiten Empfangseinheit empfangenen zeitversetzten Signal.

Ein bevorzugtes Ausführungsbeispiel wird im Folgenden anhand der Zeichnung beschrieben. Die Zeichnung zeigt:
- Fig. 1: ein erstes Ausführungsbeispiel des erfindungsgemäßen Systems zur Ortsbestimmung einer ein elektromagnetisches Signal ausstrahlender Vorrichtung;
- Fig. 2A: ein ausgesendetes Signal der zu bestimmenden Vorrichtung;
- Fig. 2B: ein an dem ersten Empfänger empfangenes Signal;
- Fig. 2C: ein an dem zweiten Empfänger empfangenes Signal;
- Fig. 2D: ein an dem dritten Empfänger empfangenes Signal;
- Fig. 3: eine erste Empfangseinheit; und
- Fig. 4: eine zweite Empfangseinheit.

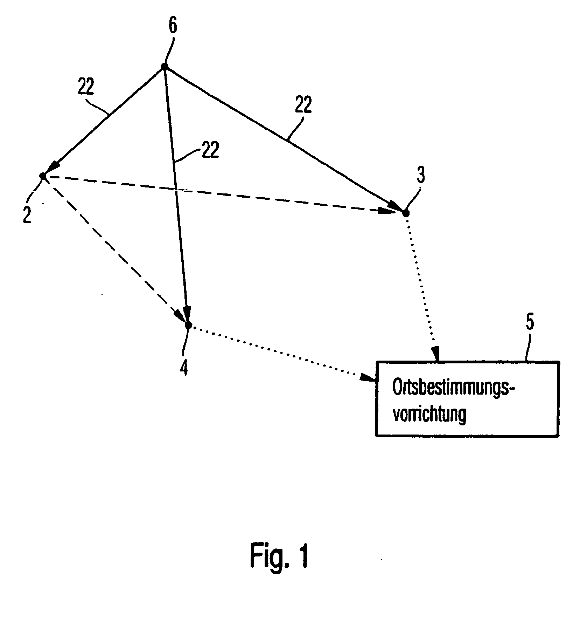

Fig. 1 zeigt ein erstes Ausführungsbeispiel des erfindungsgemäßen Systems zur Ortsbestimmung einer ein elektromagnetisches Signal aussendenden Vorrichtung. Das System 1 weist drei nicht auf einer gemeinsamen Geraden angeordneten Empfänger 2, 3 und 4 als Empfangseinheiten und eine Ortsbestimmungsvorrichtung 5 auf. Mittels des Systems 1 lässt sich die Position eines Senders 6 als eine ein elektromagnetisches Signal 22 ausstrahlende Vorrichtung bestimmen. Das System 1 ist nicht nur zur Ortsbestimmung von aktiv sendenden Vorrichtungen, sondern auch von reflektierenden, verstärkenden oder sonstigen, weiterleitenden Vorrichtungen geeignet.

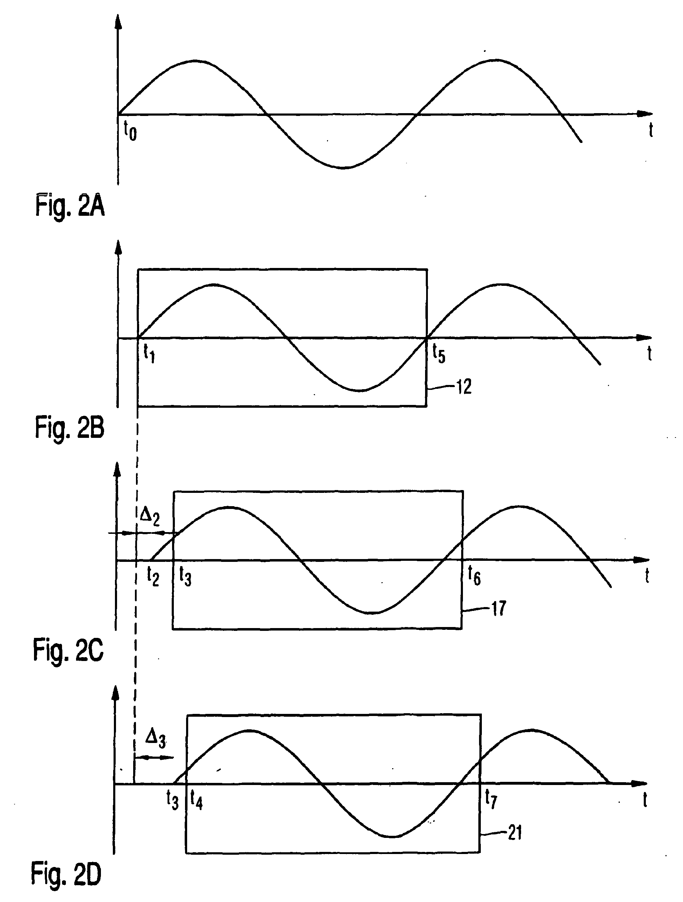

Sendet der Sender 6 ein Signal 22 aus, so wird das Signal 22 des Senders 6 an den Empfängern 2, 3 und 4 je nach der Entfernung von dem Sender 6 zeitverzögert empfangen. Die Fig. 2A bis 2D zeigen in dieser Reihenfolge das gesendete Signal 22 und das an dem ersten, zweiten und dritten Empfänger 2, 3 und 4 empfangene Signal 22. Das gesendete Signal 22 des Senders 6 wird zu dem Zeitpunkt t₀ ausgesendet und wird zu den Zeitpunkten t₁, t₂ und t₃ an dem ersten, zweiten und dritten Empfänger 2, 3 und 4 entsprechend der zurückgelegten Strecke zeitversetzt empfangen. Ohne Beschränkung der Erfindung wird angenommen, dass der erste Empfänger 2 dem Sender 6 am nächsten steht, der zweite Empfänger 3 dem Sender 6 am zweitnächsten steht und der dritte Empfänger 4 dem Sender 6 am weitesten entfernt ist. Das an dem ersten Empfänger 2 empfangene Signal 22 soll im Folgenden als erstes Empfangssignal, das an dem zweiten Empfänger 3 empfangene Signal 22 als zweites Empfangssignal und das an dem dritten Empfänger 4 empfangene Signal 22 als das dritte Empfangssignal bezeichnet werden. Aus dem Zeitversatz Δ₂ zwischen dem ersten Empfangssignal und dem zweiten Empfangssignal und dem Zeitversatz Δ₃ zwischen dem ersten Empfangssignal und dem dritten Empfangssignal in Verbindung mit den bekannte Entfernungen zwischen den drei Empfängern 2, 3, 4 lässt sich die Position des Senders 6 eindeutig berechnen. Zusätzliche Empfänger, d.h. zusätzliche Zeitversätze, können durch eine Überbestimmung des Gleichungssystems die Genauigkeit der Ortsberechnung verbessern und so die Fehler der Ortsbestimmung reduzieren.

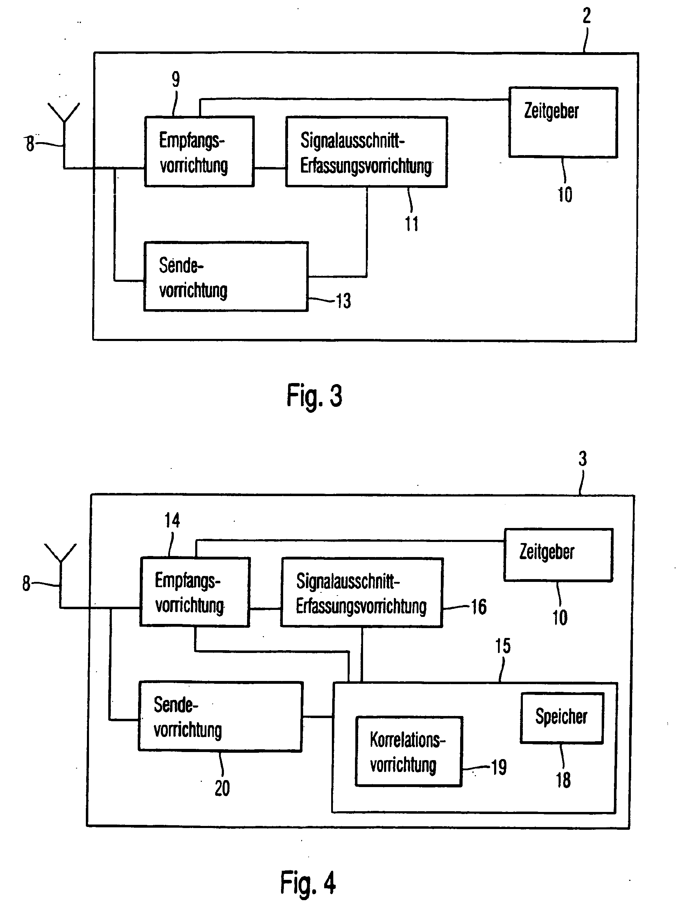

Der erste Empfänger 2 ist ein Empfänger eines ersten Typs, wie er in Fig. 3 dargestellt ist. Der erste Empfänger 2 weist eine Antenne 8 und eine Empfangsvorrichtung 9 zum Empfangen des von dem Sender 6 ausgesendeten Signals auf. Die Empfangsvorrichtung 9 ist mit einem Zeitgeber 10 verbunden, um den empfangenen Signalpunkten des ersten Empfangssignals eine absolute Empfangszeit zuzuordnen. Alle Zeitgeber 10 der Empfänger 2, 3 und 4 sind zeitlich synchronisiert, so dass alle Empfänger 2, 3 und 4 auf der gleichen Zeitbasis arbeiten und zur gleichen Zeit eine gleiche absolute Zeit haben. Alternativ können die Zeitgeber der Empfänger 2, 3 und 4 auch unterschiedliche Zeiten aufweisen, wenn deren Zeitversatz genau bekannt ist. Die Zeitsynchronisation der Zeitgeber 10 der Empfänger 2, 3, 4 ist so genau, dass die Laufzeitunterschiede der Empfangssignale im Mikrosekundenbereich bestimmt werden können.

Der erste Empfänger 2 weist weiterhin eine Signalausschnitterfassungsvorrichtung 11 auf, die einen Signalausschnitt aus dem ersten Empfangssignal herausschneidet. Die Signalausschnitterfassungsvorrichtungen der anderen Empfänger 3 und 4 sind so ausgebildet, dass die Signalausschnitte die gleiche Länge wie der erste Signalausschnitt haben. Der erste Signalausschnitt 12 wird bevorzugt so ausgewählt, dass dessen Länge der Periodendauer des ausgesendeten Signals des Senders 6 entspricht. Der erste Signalausschnitt 12 wird an die Sendevorrichtung 13 gegeben, die den Signalausschnitt 12 über die Antenne 8 an den zweiten und dritten Empfänger 3 und 4 sendet. Alternativ könnte dies über eine weitere Sendevorrichtung und/oder über eine weitere Antenne als eine Leitung geschehen. Der erste Signalausschnitt 12 enthält eine Anzahl an Signalpunkten mit einer gleichen Anzahl an Zeiten, die den Signalpunkten zugeordnet sind. Alternativ, könnte der erste Signalausschnitt 12 bei bekannter Abtastrate die Anzahl an Signalpunkten und nur den Zeitpunkt eines Signalpunktes, z.B. des ersten Signalpunkts, enthalten.

Fig. 4 zeigt den Aufbau des zweiten Empfängers 3, der ein Empfänger eines zweiten Typs ist. Der zweite Empfänger 3 empfängt über die Antenne 8 einer Empfangsvorrichtung 14 den ersten Signalausschnitt 12. Der erste Signalausschnitt 12 wird an eine erste Komponente 15 der Zeitdifferenzerfassungsvorrichtung gegeben. Gleichzeitig ist die Empfangsvorrichtung 14, genau wie die Empfangsvorrichtung 9, geeignet das von dem Sender 6 gesendete Signal als zweites Empfangssignal zu empfangen. Die Empfangsvorrichtung 14 gibt das zweite Empfangssignal an die Signalausschnitterfassungsvorrichtung 16 weiter. Die Signalausschnitterfassungsvorrichtung 16 könnte z. B. als Register ausgeführt werden, das die Signalpunkte des zweiten Empfangssignals für eine bestimmte Länge, z.B. die Dauer der Periode des Signals 22, speichert. Bei dem Empfang des ersten Signalausschnitts 12 wird der aktuelle Registereintrag als zweiter Signalausschnitt 17 an die Zeitdifferenzerfassungsvorrichtung 15 gegebenen. Die beiden Signalausschnitte 12, 17 werden in einem Speicher 18 der Zeitdifferenzerfassungsvorrichtung 15 gespeichert. Eine Korrelationsvorrichtung 19 der Zeitdifferenzerfassungsvorrichtung 15 berechnet die Kreuzkorrelationsfunktion zwischen den beiden Signalausschnitten 12 und 17. Zu beachten ist hierbei, dass bei einer zeitlichen Verschiebung der beiden Signalausschnitte 12 und 17 von Null die beiden Signalausschnitte 12 und 17 nicht überlappen, da diese zu unterschiedlichen Zeiten t₁ bis t₅ und t₃ bis t₆ aufgenommen wurden. Aufgrund des sich mit Lichtgeschwindigkeit ausbreitenden Signals des Senders 6, sind die Laufzeitunterschiede des Signals zu der ersten, zweiten und dritten Empfangseinheit sehr gering, z. B. im Mikrosekundenbereich. Auch der Sendevorgang und die Verarbeitungsdauer in dem ersten und zweiten Empfänger 2 und 3 des ersten Signalabschnitts 12 ist gegenüber der zeitlichen Länge des Signalabschnitts vernachlässigbar, da die Länge der Signalausschnitte 12 und 17 wesentlich größer als die zu messenden Zeitdifferenzen zwischen dem ersten und zweiten Empfangssignal und als die Sende- und Verarbeitungszeit des ersten Empfangssignal gewählt wird. In einem bevorzugten Ausführungsbeispiel ist die Länge der Signalausschnitte 12 und 14 gleich oder größer der Dauer der Periode des Signals, die sich im Millisekundenbereich befindet. Deshalb ist die sich überlappende Zeitdauer von t₃ bis t₅ der beiden Signalausschnitte 12 und 17 nahezu so groß wie die Länge des Signalausschnitts 12 und 17.

Sollte die Verarbeitungsdauer und/oder die Sendedauer des ersten Signalausschnitts 12 nicht mehr vernachlässigbar sein, so könnte der zweite Signalausschnitt 17 in der Signalausschnitterfassungsvorrichtung 11 so kalibriert werden, dass diese Verzögerung auskalibriert wird. Alternativ könnte, wenn die Länge des Signalausschnitts 12 und 17 der Periodenlänge des Signals oder einem ganzzahligen Vielfachen dieser entspricht, der nicht überlappende Bereich eines der beiden Signalausschnitte 12 und 17 abgeschnitten werden und aufgrund der Periodizität an dem anderen Ende des Signalausschnitts angehängt werden. Somit kann die Kreuzkorrelationsfunktion jeden Funktionspunkt, d.h. jede Zeitverschiebung der Signalausschnitte 12 und 17, auf der Basis einer gleichen Anzahl an überlappenden Punkten berechnet werden.

Die erste Komponente 15 der Zeitdifferenzerfassungsvorrichtung detektiert das Maximum der Zeitkorrelationsfunktion, welches der Zeitverschiebung Δ ₂ des ersten und des zweiten Empfangssignals entspricht. Ist diese Zeitverschiebung Δ₂ positiv, wurde das erste Empfangssignal früher empfangen. Ist diese Zeitverschiebung negativ, wurde das erste Empfangssignal später als das zweite Empfangssignal empfangen. Diese Zeitverschiebung wird über die Sendevorrichtung 20 an die Antenne 8 gegeben und an die Ortsbestimmungsvorrichtung 5 gesendet.

Der dritte Empfänger 4 ist im gewählten Beispiel ebenfalls ein Empfänger des zweiten Typs. Der dritte Empfänger 4 ist genau wie der zweite Empfänger 3 aufgebaut und wird deshalb nicht noch einmal beschrieben. Analog empfängt der dritte Empfänger 4 den ersten Signalausschnitt 12 und nimmt in der Signalausschnitterfassungsvorrichtung einen dritten Signalausschnitt 21 auf, sobald die Empfangsvorrichtung des dritten Empfängers 4 den ersten Signalausschnitt 12 empfängt. Anstatt der ersten Komponente 15 der Zeitdifferenzerfassungsvorrichtung, beinhaltet der dritte Empfänger 4 eine zweite Komponente als weitere Komponente der Zeitdifferenzerfassungsvorrichtung, die genauso aufgebaut ist, wie die erste Komponente. Die Empfangsvorrichtung und die Signalausschnittvorrichtung des dritten Empfängers 4 geben den ersten und dritten Signalausschnitt 12 und 21 an die zweite Komponente. Entsprechend wird in der zweiten Komponente des dritten Empfängers 4 die Zeitdifferenz Δ₃ aus dem Maximum der Korrelationsfunktion der beiden Signalausschnitte 12 und 21 bestimmt. Die Zeitdifferenz Δ₃ zwischen dem ersten und dem dritten Empfangssignal wird ebenso an die Ortsbestimmungsvorrichtung 5 gesendet. Die Ortsbestimmungsvorrichtung 5 berechnet aus den Zeitdifferenzen Δ₂ und Δ₃ und den bekannten Distanzen zwischen den drei Empfängern 2, 3, 4 die Position des Senders 6. Die Übermittlung des zweiten und dritten Signalausschnitts 17 und 21 an die erste und zweite Komponente wird innerhalb der Empfangseinheiten 3 und 4, z.B. durch eine Leitungsverbindung, durchgeführt.

In einem alternativen Ausführungsbeispiel könnte das System zur Ortsbestimmung des Senders 6 auch aus zwei Empfängern des ersten Typs, wie er in Fig. 3 beschrieben ist, und einem dritten Empfänger eines zweiten Typs, wie er in Fig. 4 beschrieben ist, und der Ortsbestimmungsvorrichtung 5 bestehen. In einem solchen System werden der erste und der zweite Empfänger, die jeweils dem ersten Typ angehören, zur gleichen Zeit einen Signalausschnitt aufnehmen und an den dritten Empfänger senden. Der dritte Empfänger weist dabei die erste und die zweite Komponente des ersten Ausführungsbeispiels in einer einzigen Zeitdifferenzerfassungsvorrichtung auf. Der dritte Empfänger weist nur eine einkomponentige Zeitdifferenzerfassungsvorrichtung auf, die parallel oder seriell die erste und zweite Zeitdifferenz berechnet. Die Zeitdifferenzerfassungsvorrichtung kann nun die Zeitdifferenzen der ersten beiden Signalausschnitte zu jeweils dem dritten Signalausschnitt des dritten Empfängers berechnen und an die Ortsbestimmungsvorrichtung 5 geben. In einem weiteren alternativen Ausführungsbeispiel kann das erfindungsgemäße System zur Ortsbestimmung des Senders 6 aus drei Empfängern des ersten Typs, wie er in Fig. 3 beschrieben ist, bestehen, die jeweils zur gleichen Zeit einen Signalausschnitt aufnehmen und diesen an eine zentrale Recheneinheit, z. B. die Ortsbestimmungsvorrichtung 5 senden. Die Ortsbestimmungsvorrichtung 5 würde dann ebenfalls eine ein- oder zweikomponentige Zeitdifferenzerfassungsvorrichtung aufweisen.

Die Übermittlung der internen Informationen, wie Signalausschnitte und Zeitdifferenzen zwischen den Empfängern und der Ortsbestimmungsvorrichtung, werden besonders vorteilhaft für mobile Systeme drahtlos übertragen. Allerdings ist darauf zu achten, dass die drahtlose Übertragung der internen Informationen sich gegenüber der Signalübertragung des Senders 6 unterscheidet, damit das Signal 22 des Senders 6 nicht gestört wird. Es ist insbesondere vorteilhaft, die Signalausschnitte stark komprimiert und parallelisiert zu übertragen. Die internen Informationen werden bevorzugt ebenfalls über ein elektromagnetisches Signal übertragen, wobei dieses elektromagnetische Signal so ausgestaltet ist, dass es möglichst schwer zu orten ist. Dies könnte z. B. durch eine Richtantenne, die auf das Ziel der Übertragung gerichtet ist, realisiert werden. Eine solche Richtantenne wird vorzugsweise nur für die Übertragung von größeren Datenmengen, wie die Signalausschnitte, verwendet. Für ortsfest installierte Systeme könnte die Verbindung zur Übertragung der internen Informationen ganz oder teilweise leitungsgebunden realisiert sein. Die Übertragung kann natürlich auch optisch in einer drahtlosen oder leitungsgebundenen Verbindung geschehen.

Die drei Empfänger könnten weiterhin so ausgebildet sein, dass sie alle Funktionen des Empfängers des ersten Typs, wie er in Fig. 3 dargestellt ist, und der Funktionen des Empfängers des zweiten Typs, wie er in Fig. 4 dargestellt ist, aufweisen. Ein System mit drei solchen Empfängern könnte flexibel zwischen den beschriebenen Ausführungsbeispielen wechseln. Durch die Redundanz wird eine erhebliche Erhöhung der Ausfallsicherheit erreicht.

Die Erfindung ist nicht auf die beschriebenen Ausführungsbeispiele beschränkt. Vielmehr sind alle Ausführungsbeispiele vorteilhaft miteinander kombinierbar.

## Patentansprüche

1. Verfahren zur Ortsbestimmung einer ein elektromagnetisches Signal (22) aussendenden Vorrichtung (6) mittels zumindest dreier Empfangseinheiten (2, 3, 4) die folgenden Schritte aufweisend:
- Empfangen des ausgesendeten Signals (22) an den Empfangseinheiten (2, 3, 4);
- Berechnen des Ortes der Vorrichtung (6) aus wenigstens zwei Zeitdifferenzen (Δ₂, Δ₃) des Empfangs des ausgesendeten Signals (22) an den Empfangseinheiten (2, 3, 4);
- Erfassen eines Signalausschnitts (12, 17, 21) des empfangenen Signals an jeder Empfangseinheit (2, 3, 4);
- Übertragen jedes Signalausschnitts (12, 17, 21) an eine Zeitdifferenzerfassungsvorrichtung (15);
gekennzeichnet durch
- Bestimmen der Zeitdifferenzen (Δ₂, Δ₃) mittels jeweils eines Maximums einer Kreuzkorrelationsfunktion zweier Signalausschnitte (12, 17; 12, 21) in der Zeitdifferenzerfassungsvorrichtung, und
dass eine Empfangseinheit (2, 3; 2, 4) zumindest einen Teil der Zeitdifferenzerfassungsvorrichtung aufweist, wobei der erfasste Signalausschnitt dieser Empfangseinheit (2, 3, 4) und der erfasste Signalausschnitt wenigstens einer weiteren Empfangseinheit (3, 4) an diesen Teil der Zeitdifferenzerfassungsvorrichtung gesendet werden und eine erste Zeitdifferenz (Δ₂; Δ₃) der wenigstens zwei Zeitdifferenzen (Δ₂, Δ₃) aus der Kreuzkorrelationsfunktion dieser Signalausschnitte (12, 17; 12, 21) in dem zumindest einen Teil (15) der Zeitdifferenzerfassungsvorrichtung bestimmt wird
dass der Teil eine erste Komponente (15) der Zeitdifferenzerfassungsvorrichtung ist und eine andere Empfangseinheit (3) der Empfangseinheiten (2, 3, 4) eine zweite Komponente der Zeitdifferenzerfassungsvorrichtung aufweist, wobei in der ersten Komponente (15) eine erste Zeitdifferenz (Δ₂) zwischen dem Signalausschnitt der die erste Komponente aufweisenden Empfangseinheit und einer Empfangseinheit ohne Komponente der Zeitdifferenzerfassungsvorrichtung bestimmt wird und in der zweiten Komponente eine zweite Zeitdifferenz (Δ₃) zwischen dem Signalausschnitt der die zweite Komponente aufweisenden Empfangseinheit und einer Empfangseinheit ohne Komponente der Zeitdifferenzerfassungsvorrichtung mittels Kreuzkorrelationsfunktion der Signalausschnitte (12, 21) bestimmt wird.

2. Verfahren nach Anspruch 1,
**dadurch gekennzeichnet**,
dass die Empfangseinheiten (2, 3, 4) untereinander zeitlich synchronisiert werden.

3. Verfahren nach Anspruch 1 oder 2,
**dadurch gekennzeichnet**,
dass die Dauer der Signalausschnitte (12, 17, 21) größer als eine Periodendauer des ausgestrahlten Signals (22) ist oder der Periode des ausgestrahlten Signals (22) entspricht.

4. Verfahren nach Anspruch 3,
**dadurch gekennzeichnet**,
dass jede Zeitkorrelationsfunktion nur für positive oder negative Zeitverschiebungen berechnet wird und dass, wenn die aus dem Maximum der Korrelationsfunktion bestimmte Zeitdifferenz größer als die halbe Periodendauer ist, die Zeitdifferenz (Δ₂, Δ₃) als die Differenz der aus dem Maximum der Korrelationsfunktion bestimmten Zeitdifferenz von der Periodendauer berechnet wird.

5. Verfahren nach einem der Ansprüche 1 bis 4,
**dadurch gekennzeichnet**,
dass der erfasste Signalausschnitt aller Empfangseinheiten an die Zeitdifferenzerfassungsvorrichtung der Empfangseinheit gesendet wird.

6. System zur Ortsbestimmung einer ein elektromagnetisches Signal (22) aussendenden Vorrichtung (6), aufweisend
- zumindest drei Empfangseinheiten (2, 3, 4) zum Empfangen des ausgesendeten Signals (22);
- eine Ortsbestimmungsvorrichtung (5) zur Berechnung des Ortes der Vorrichtung (6) aus wenigstens zwei Zeitdifferenzen (Δ₂, Δ₃) zwischen Signalausschnitten des ausgesendeten Signals (22) an den Empfangseinheiten (2, 3, 4) ;
- eine Signalausschnitterfassungsvorrichtung (11, 16) in jeder Empfangseinheit (2, 3, 4) zum Erfassen eines Signalausschnitts (12, 17, 21) des an der Empfangseinheit (2, 3, 4) empfangenen Signals;
- Übertragungsmittel (20) in jeder Empfangseinheit (2, 3, 4) zur Übertragung jedes Signalausschnitts (12, 17, 21) an eine Zeitdifferenzerfassungsvorrichtung
gekennzeichnet durch,
dass die Zeitdifferenzerfassungsvorrichtung (15) geeignet ist, die Zeitdifferenzen (Δ₂, Δ₃) jeweils mittels eines Maximums einer Kreuzkorrelationsfunktion zweier Signalausschnitte (12, 17; 12, 21) zu bestimmen, und
dass eine Empfangseinheit (2, 3; 2, 4) zumindest einen Teil der Zeitdifferenzerfassungsvorrichtung aufweist, wobei der erfasste Signalausschnitt dieser Empfangseinheit (2, 3, 4) und der erfasste Signalausschnitt wenigstens einer weiteren Empfangseinheit (3, 4) an diesen Teil der Zeitdifferenzerfassungsvorrichtung gesendet werden und eine erste Zeitdifferenz (Δ₂; Δ₃) der wenigstens zwei Zeitdifferenzen (Δ₂, Δ₃) aus der Kreuzkorrelationsfunktion dieser Signalausschnitte (12, 17; 12, 21) in dem zumindest einen Teil (15) der Zeitdifferenzerfassungsvorrichtung bestimmt wird; und
dass der Teil eine erste Komponente (15) der Zeitdifferenzerfassungsvorrichtung ist und eine andere Empfangseinheit (3) der Empfangseinheiten (2, 3, 4) eine zweite Komponente der Zeitdifferenzerfassungsvorrichtung aufweist, wobei in der ersten Komponente (15) eine erste Zeitdifferenz (Δ₂) zwischen dem Signalausschnitt der die erste Komponente aufweisenden Empfangseinheit und einer Empfangseinheit ohne Komponente der Zeitdifferenzerfassungsvorrichtung bestimmt wird und in der zweiten Komponente eine zweite Zeitdifferenz (Δ₃) zwischen dem Signalausschnitt der die zweite Komponente aufweisenden Empfangseinheit und einer Empfangseinheit ohne Komponente der Zeitdifferenzerfassungsvorrichtung mittels Kreuzkorrelationsfunktion der Signalausschnitte (12, 21) bestimmt wird.

7. System nach Anspruch 6,
**dadurch gekennzeichnet**,
dass die zumindest drei Empfangseinheiten (2, 3, 4) untereinander zeitlich synchronisiert sind.

8. System nach Anspruch 6 oder 7,
**dadurch gekennzeichnet**,
dass die Dauer der Signalausschnitte (12, 17, 21) größer als eine Periodendauer des ausgestrahlten Signals (22) ist oder der Periode des ausgestrahlten Signals (22) entspricht.

9. System nach Anspruch 8,
**dadurch gekennzeichnet**,
dass die Zeitdifferenzerfassungsvorrichtung geeignet ist, jede Zeitkorrelationsfunktion nur für positive oder negative Zeitverschiebungen zu berechnen und, wenn die aus dem Maximum der Korrelationsfunktion bestimmte Zeitdifferenz größer als die halbe Periodendauer ist, die Zeitdifferenz (Δ₂, Δ₃) als die Differenz der aus dem Maximum der Korrelationsfunktion bestimmten Zeitdifferenz von der Periodendauer zu berechnen.

## Claims

1. Method for locating a device (6) emitting an electromagnetic signal (22) by means of at least three receiving units (2, 3, 4), having the following steps:
- receiving the emitted signal (22) at the receiving units (2, 3, 4);
- calculating the location of the device (6) from at least two time differences (Δ₂, Δ₃) of the reception of the emitted signal (22) at the receiving units (2, 3, 4);
- detecting a signal section (12, 17, 21) of the received signal at each receiving unit (2, 3, 4);
- transmitting each signal section (12, 17, 21) to a time difference detection device (15); **characterized by**
- determining the time differences (Δ₂, Δ₃) by means in each case of a maximum of a cross correlation function of two signal sections (12, 17; 12, 21) in the time difference detection device, and
in that one receiving unit (2, 3; 2, 4) has at least a part of the time difference detection device, the detected signal section of said receiving unit (2, 3, 4), and the detected signal section of at least one further receiving unit (3, 4) being sent to said part of the time difference detection device, and a first time difference (Δ₂; Δ₃) of the at least two time differences (Δ₂, Δ₃) being determined from the cross correlation function of said signal sections (12, 17; 12, 21) in the at least one part (15) of the time difference detection device, and
in that the part is a first component (15) of the time difference detection device, and one other receiving unit (3) of the receiving units (2, 3, 4) has a second component of the time difference detection device, in the first component (15) a first time difference (Δ₂) being determined between the signal section of the receiving unit having the first component and a receiving unit without component of the time difference detection device, and in the second component a second time difference (Δ₃) being determined between the signal section of the receiving unit having the second component and a receiving unit without component of the time difference detection device by means of a cross correlation function of the signal sections (12, 21).

2. Method according to Claim 1, **characterized in that** the receiving units (2, 3, 4) are temporarily synchronized with one another.

3. Method according to either of Claims 1 and 2, **characterized in that** the duration of the signal sections (12, 17, 21) is greater than one period duration of the emitted signal (22), or corresponds to the period of the emitted signal (22).

4. Method according to Claim 3, **characterized in that** each time correlation function is calculated only for positive or negative time shifts, and **in that** when the time difference determined from the maximum of the correlation function is greater than half the period duration, the time difference (Δ₂, Δ₃) is calculated as the difference between the time difference determined from the maximum of the correlation function and the period duration.

5. Method according to one of Claims 1 to 4, **characterized in that** the detected signal section of all receiving units is sent to the time difference detection device of the receiving unit.

6. System for locating a device (6) emitting an electromagnetic signal (22), having
- at least three receiving units (2, 3, 4) for receiving the emitted signal (22);
- a locating device (5) for calculating the location of the device (6) from at least two time differences (Δ₂, Δ₃) between signal sections of the emitted signal (22) at the receiving units (2, 3, 4);
- a signal section detecting device (11, 16) in each receiving unit (2, 3, 4) for detecting a signal section (12, 17, 21) of the signal received at the receiving unit (2, 3, 4); and
- transmitting means (20) in each receiving unit (2, 3, 4) for transmitting each signal section (12, 17, 21) to a time difference detection device,
**characterized**
in that the time difference detection device (15) is suitable for determining the time differences (Δ₂, Δ₃) by means of in each case one maximum of a cross correlation function of two signal sections (12, 17; 12, 21), and
in that one receiving unit (2, 3; 2, 4) has at least a part of the time difference detection device, the detected signal section of said receiving unit (2, 3, 4), and the detected signal section of at least one further receiving unit (3, 4) being sent to said part of the time difference detection device, and a first time difference (Δ₂; Δ₃) of the at least two time differences (Δ₂, Δ₃) being determined from the cross correlation function of said signal sections (12, 17; 12, 21) in the at least one part (15) of the time difference detection device, and
in that the part is a first component (15) of the time difference detection device, and one other receiving unit (3) of the receiving units (2, 3, 4) has a second component of the time difference detection device, in the first component (15) a first time difference (Δ₂) being determined between the signal section of the receiving unit having the first component and a receiving unit without component of the time difference detection device, and in the second component a second time difference (Δ₃) being determined between the signal section of the receiving unit having the second component and a receiving unit without component of the time difference detection device by means of a cross correlation function of the signal sections (12, 21).

7. System according to Claim 6, **characterized in that** the at least three receiving units (2, 3, 4) are temporarily synchronized with one another.

8. System according to either of Claims 6 and 7, **characterized in that** the duration of the signal sections (12, 17, 21) is greater than one period duration of the emitted signal (22), or corresponds to the period of the emitted signal (22).

9. System according to Claim 8, **characterized in that** the time difference detection device is suitable for calculating each time correlation function only for positive or negative time shifts and, when the time difference determined from the maximum of the correlation function is greater than half the period duration, for calculating the time difference (Δ₂, Δ₃) as the difference between the time difference determined from the maximum of the correlation function and the period duration.

## Revendications

1. Procédé de détermination spatiale d'un dispositif (6) émettant un signal électromagnétique (22) grâce à au moins trois unités de réception (2, 3, 4) comportant les étapes suivantes :
- recevoir le signal émis (22) dans les unités de réception (2, 3, 4) ;
- calculer le lieu du dispositif (6) à partir d'au moins deux différences de temps (Δ₂, Δ₃) de la réception du signal émis (22) dans les unités de réception (2, 3, 4) ;
- détecter un segment de signal (12, 17, 21) du signal reçu dans chaque unité de réception (2, 3, 4) ;
- transmettre chaque segment de signal (12, 17, 21) à un dispositif de détection de différences de temps (15) ;
**caractérisé par**
- la détection des différences de temps (Δ₂, Δ₃) grâce à un maximum respectif d'une fonction de corrélation croisée de deux segments de signal (12, 17 ; 12, 21) dans le dispositif de détection de différences de temps, et
en ce qu'une unité de réception (2, 3 ; 2, 4) présente au moins une partie du dispositif de détection de différences de temps, dans laquelle le segment de signal détecté de cette unité de réception (2, 3, 4) et le segment de signal détecté au moins d'une autre unité de la réception (3, 4) sont envoyés à cette partie du dispositif de détection de différences de temps et une première différence de temps (Δ₂ ; Δ₃) des au moins deux différences de temps (Δ₂, Δ₃) est déterminée à partir de la fonction de corrélation croisée de ces segments de signal (12, 17 ; 12, 21) dans la au moins une partie (15) du dispositif de détection de différences de temps
en ce que la partie est un premier composant (15) du dispositif de détection de différences de temps et une autre unité de réception (3) des unités de réception (2, 3, 4) présente un second composant du dispositif de détection de différences de temps, dans laquelle une première différence de temps (Δ₂) entre le segment de signal de l'unité de réception présentant le premier composant et une unité de réception sans composant du dispositif de détection de différences de temps est déterminée dans le premier composant (15) et une seconde différence de temps (Δ₃) entre le segment de signal de l'unité de réception présentant le second composant et une unité de réception sans composant du dispositif de détection de différences de temps est déterminée dans le second composant grâce à une fonction de corrélation croisée des segments de signal (12, 21).

2. Procédé selon la revendication 1, **caractérisé en ce que**
les unités de réception (2, 3, 4) sont synchronisées temporellement entre elles.

3. Procédé selon la revendication 1 ou 2, **caractérisé en ce que**
la durée des segments de signal (12, 17, 21) est supérieure à une durée de période du signal émis (22) ou correspond à la période du signal émis (22).

4. Procédé selon la revendication 3, **caractérisé en ce que**
chaque fonction de corrélation temporelle est calculée uniquement pour des décalages temporels positifs ou négatifs et **en ce que**, lorsque la différence de temps déterminée à partir du maximum de la fonction de corrélation est supérieure à la moitié de la durée de période, la différence de temps (Δ₂, Δ₃) est calculée en tant que différence de la différence de temps de la durée de période déterminée à partir du maximum de la fonction de corrélation.

5. Procédé selon l'une des revendications 1 à 4, **caractérisé en ce que**
le segment de signal détecté de toutes les unités de réception est envoyé au dispositif de détection de différences de temps de l'unité de réception.

6. Système pour la détermination spatiale d'un dispositif (6) émettant un signal électromagnétique (22), présentant
- au moins trois unités de réception (2, 3, 4) pour recevoir le signal émis (22) ;
- un dispositif de détermination spatiale (5) pour calculer le lieu du dispositif (6) à partir d'au moins deux différences de temps (Δ₂, A₃) entre les segments de signal du signal émis (22) dans les unités de réception (2, 3, 4) ;
- un dispositif de détection de segment de signal (11, 16) dans chaque unité de réception (2, 3, 4) pour détecter un segment de signal (12, 17, 21) du signal reçu dans l'unité de réception (2, 3, 4) ;
- un moyen de transmission (20) dans chaque unité de réception (2, 3, 4) pour transmettre chaque segment de signal (12, 17, 21) à un dispositif de détection de différences de temps
**caractérisé par**,
en ce que le dispositif de détection de différences de temps (15) est adapté pour déterminer les différences de temps (Δ₂, Δ₃) respectivement au moyen d'un maximum d'une fonction de corrélation croisée de deux segments de signal (12, 17 ; 12, 21), et
en ce qu'une unité de réception (2, 3 ; 2, 4) présente au moins une partie du dispositif de détection de différences de temps, dans laquelle le segment de signal détecté de cette unité de réception (2, 3, 4) et le segment de signal détecté d'au moins une autre unité de réception (3, 4) sont envoyés à cette partie du dispositif de détection de différences de temps et une première différence de temps (Δ₂ ; Δ₃) des au moins deux différences de temps (Δ₂, Δ₃) est déterminée à partir de la fonction de corrélation croisée de ces segments de signal (12, 17 ; 12, 21) dans la au moins une partie (15) du dispositif de détection de différences de temps ; et
en ce que la partie est un premier composant (15) du dispositif de détection de différences de temps et une autre unité de réception (3) des unités de réception (2, 3, 4) présente un second composant du dispositif de détection de différences de temps, dans lequel une première différence de temps (Δ₂) entre le segment de signal de l'unité de réception présentant le premier composant et une unité de réception sans composant du dispositif de détection de différences de temps est déterminée dans le premier composant (15) et une seconde différence de temps (Δ₃) entre le segment de signal de l'unité de réception présentant le second composant et une unité de réception sans composant du dispositif de détection de différence de temps est déterminée dans le second composant grâce à la fonction de corrélation croisée des segments de signal (12, 21).

7. Système selon la revendication 6, **caractérisé en ce que**
les au moins trois unités de réception (2, 3, 4) sont synchronisées temporellement entre elles.

8. Système selon la revendication 6 ou 7, **caractérisé en ce que**
la durée des segments de signal (12, 17, 21) est supérieure à une durée de période du signal émis (22) ou correspond à la période du signal émis (22).

9. Système selon la revendication 8, **caractérisé en ce que**
le dispositif de détection de différences de temps est adapté pour calculer chaque fonction de corrélation temporelle uniquement pour des décalages temporels positifs ou négatifs, et, lorsque la différence de temps déterminée à partir du maximum de la fonction de corrélation est supérieure à la moitié de la durée de période, pour calculer la différence de temps (Δ₂, Δ₃) en tant que différence de la différence de temps de la durée de période déterminée à partir du maximum de la fonction de corrélation.
